# EUROPEAN PATENT SPECIFICATION

(11) **EP 3 267 023 B1**
(45) Date of publication and mention of the grant of the patent: **06.05.2020**
(21) Application number: 17180589.8
(22) Date of filing: 10.07.2017
(51) Int. Cl.: F02K 1/82, F02K 1/08, F02K 1/38, F01D 25/30

(54) **GAS TURBINE ENGINE TAIL CONE**
GASTURBINENTRIEBWERKHECKKONUS
CÔNE DE QUEUE DE MOTEUR À TURBINE À GAZ

(30) Priority: 08.07.2016 US 201615205492
(43) Date of publication of application: 10.01.2018
(73) Proprietor: United Technologies Corporation, Farmington, CT 06032 (US)
(72) Inventor: BEACH, Eric, Coventry, CT 06238 (US); HON, Robert Ken, Palm Beach Gardens, FL 33410 (US); NACKOUL, Michel E., Wethersfield, CT 06109 (US); FARAH, Jorge I., Hartford, CT 06105 (US)
(74) Representative: Dehns

(56) References cited:
- JP-A- 2005 273 502
- US-A- 2 934 891
- US-A- 3 970 252
- US-A- 4 044 555

## Description

### BACKGROUND

The present disclosure relates to gas turbine engines, and more particularly to tail cones for gas turbine engines.

A gas turbine engine typically includes a tail cone secured to an aft end of a turbine exhaust case to form an aerodynamic cover over an aft bearing assembly of the gas turbine engine and to define an aerodynamic flow path for hot exhaust gases of the gas turbine engine. The tail cone often includes cooling openings in the tail cone, for example, film cooling openings, to cool the tail cone and prevent deterioration of the tail cone due to exposure to the hot exhaust gases.

The tail cone has an aft tip portion with interior features typically formed by conventional machining, with the configuration and thus the cooling properties at the tip portion limited by the conventional machining tooling limitations. Such limitations result in a large thermal mass at the tail cone tip portion that is difficult to cool, which in turn drives thermal stresses in the tail cone.

US 2934891 discloses an anti-screech inner body disposed in an afterburner duct of a jet engine. The inner body is a hollow conical frustrum having perforations through its outer wall. A liner is placed inboard of the outer wall and separated from the outer wall by a plurality of spacers.

US 4044555 discloses a conical tail cone for a gas turbine engine. The tail cone forms a hollow conical chamber with perforations through its outer wall to permit passage of air from inside the cone.

US 3970252 discloses a tail cone formed of telescoped sections, wherein air is permitted to pass through the tail cone at the connection points between the telescoped sections.

JP 2005 273502 discloses a tail cone for a gas turbine engine, the tail cone having outlets for allowing cooling air to pass to the exterior of the tail cone.

### SUMMARY

Viewed from a first aspect of the present invention, there is provided a tail cone with the features of claim 1, namely a tail cone for a gas turbine engine, comprising: a tip section including an inner radius; an outer sheet converging to the tip section and further comprising an inner surface; an inner sheet spaced from the outer sheet; and a plurality of cooling openings extending through the outer sheet to direct a cooling airflow therethrough to cool the outer sheet; characterised in that the inner sheet includes a locating opening; the outer sheet further comprises a locating portion extending axially into the locating opening of the inner sheet to define and control a spacing between the outer sheet and the inner sheet, a radial gap existing between the locating portion and the locating opening; the inner radius is defined between the locating portion and the inner surface of the outer sheet, and wherein a cooling opening nearest an apex of the tip section is located between 0.25 mm and 3.175 mm from the inner radius.

The locating portion may be substantially cylindrical.

The inner radius may be formed between the outer sheet and the locating portion.

The inner radius may be in the range of 0.0025 inches (0.06 mm) and 0.125 inches (3.175 mm).

The inner radius may be in the range of 0.0025 inches (0.06 mm) and 0.015 inches (0.38 mm).

The tip section may be formed from one or more of additive manufacturing, electrical discharge machining (EDM), chemical milling or chemical etching.

Viewed from another aspect, the invention provides a gas turbine engine including a turbine section and a tail cone as described above located axially downstream of the turbine section.

The locating portion may be substantially cylindrical.

The inner radius may be in the range of 0.0025 inches and (0.06 mm) 0.125 inches (3.175 mm).

The inner radius may be formed between the outer sheet and the locating portion in the range of 0.0025 inches (0.06 mm) and 0.015 inches (0.38 mm).

The tip section may be formed from one or more of additive manufacturing, electrical discharge machining (EDM), chemical milling or chemical etching.

Viewed from yet another aspect, the invention provides a method of forming a tail cone of a gas turbine engine with the features of claim 6, the method comprising: forming an outer sheet that converges to a tip section with an inner radius; locating an inner sheet spaced from the outer sheet; and forming a plurality of cooling openings extending through the outer sheet to direct a cooling airflow therethrough to cool the outer sheet; characterised in that the outer sheet further comprises a locating portion, the inner radius defined between the locating portion and an inner surface of the outer sheet; the inner sheet further comprises a locating opening; and the method further comprises inserting the locating portion of the outer sheet into the locating opening of the inner sheet to define and control a spacing between the outer sheet and the inner sheet, a radial gap existing between the locating portion and the locating opening; wherein a cooling opening nearest an apex of the tip section is located between 0.25 mm and 0.76 mm from the inner radius.

The inner radius may be formed between the outer sheet and the locating portion in the range of 0.0025 inches (0.06 mm) and 0.015 inches (0.38 mm).

The tip section may be formed from one or more of additive manufacturing, electrical discharge machining (EDM), chemical milling or chemical etching.

### BRIEF DESCRIPTION OF THE DRAWINGS

The subject matter which is regarded as the present disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a cross-sectional view of an embodiment of a gas turbine engine;
FIG. 2 is a cross-sectional view of an embodiment of a tail cone for a gas turbine engine; and
FIG. 3 is a schematic view of an embodiment of a tip portion of a tail cone for a gas turbine engine.

### DETAILED DESCRIPTION

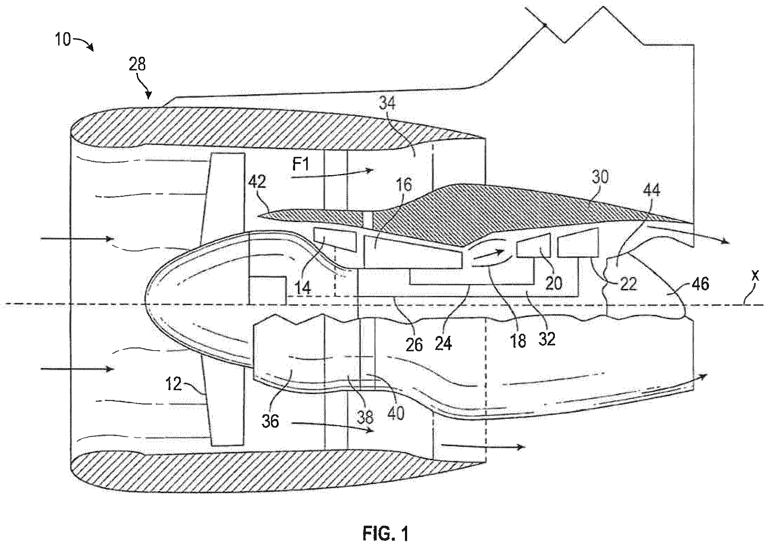

FIG. 1 is a schematic illustration of a gas turbine engine 10. The gas turbine engine generally has includes fan section 12, a low pressure compressor 14, a high pressure compressor 16, a combustor 18, a high pressure turbine 20 and a low pressure turbine 22. The gas turbine engine 10 is circumferentially disposed about an engine centerline X. During operation, air is pulled into the gas turbine engine 10 by the fan section 12, pressurized by the compressors 14, 16, mixed with fuel and burned in the combustor 18. Hot combustion gases generated within the combustor 18 flow through high and low pressure turbines 20, 22, which extract energy from the hot combustion gases.

In a two-spool configuration, the high pressure turbine 20 utilizes the extracted energy from the hot combustion gases to power the high pressure compressor 16 through a high speed shaft 24, and the low pressure turbine 22 utilizes the energy extracted from the hot combustion gases to power the low pressure compressor 14 and the fan section 12 through a low speed shaft 26. The present disclosure, however, is not limited to the two-spool configuration described and may be utilized with other configurations, such as single-spool or three-spool configurations, or gear-driven fan configurations.

Gas turbine engine 10 is in the form of a high bypass ratio turbine engine mounted within a nacelle or fan casing 28 which surrounds an engine casing 30 housing an engine core 32. A significant amount of air pressurized by the fan section 12 bypasses the engine core 32 for the generation of propulsive thrust. The airflow entering the fan section 12 may bypass the engine core 32 via a fan bypass passage 34 extending between the fan casing 28 and the engine casing 30 for receiving and communicating a discharge flow F1. The high bypass flow arrangement provides a significant amount of thrust for powering an aircraft.

The engine casing 30 generally includes an inlet case 36, a low pressure compressor case 38, and an intermediate case 40. The inlet case 36 guides air to the low pressure compressor case 38, and via a splitter 42 also directs air through the fan bypass passage 34. The engine casing 30 further includes a turbine exhaust case 44 with a tail cone 46 affixed thereto.

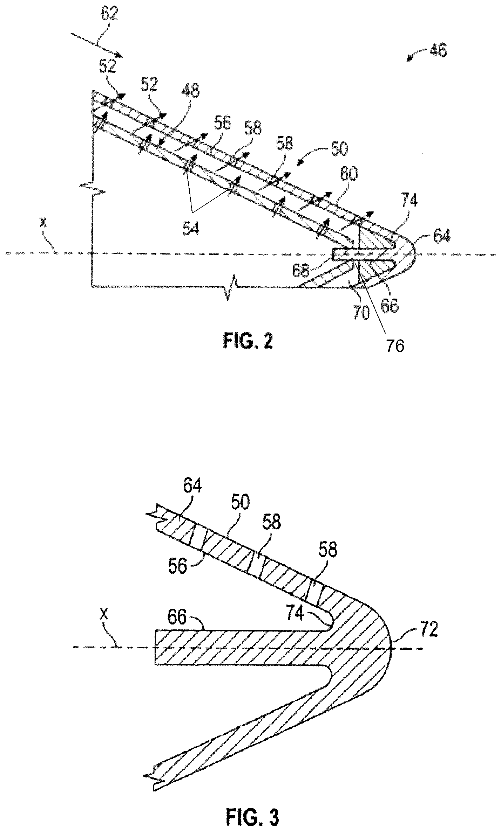

Referring now to FIG. 2, illustrated is an embodiment of the tail cone 46. The tail cone 46 is located about the engine centerline X and includes an inner sheet 48 with an outer sheet 50 located radially outboard from and spaced from the inner sheet 48. The outer sheet 50 defines an outermost extent of the tail cone 46. The inner sheet 48 and the outer sheet 50 are configured to direct cooling airflow 52 to the tail cone 46. In some embodiments, the inner sheet 48 is configured with a plurality of impingement cooling holes 54 to direct the cooling airflow 52 to impinge on an inner surface 56 of the outer sheet 50. The outer sheet 50 includes a plurality of film cooling holes 58 to direct the cooling airflow 52 through the outer sheet 50 and along an outer surface 60 of the outer sheet 50 defining a cooling film along the outer surface 60 to protect the outer sheet 50 from hot exhaust gases 62 exiting the low pressure turbine 22.

Referring now to FIG. 3, the outer sheet 50 converges to a tip section 64 at an axially rearwardmost portion of the tail cone 46. The tip section 64 includes an axially extending locating portion 66, which in some embodiments is cylindrical. The locating portion 66 extends into a locating opening 68 (shown in FIG. 2) in the inner sheet 48 to define and control a spacing 70 (FIG. 2) between the inner sheet 48 and the outer sheet 50. The spacing allows for circulation of the cooling airflow 52 between the inner sheet 48 and the outer sheet 50 and enables the use of both impingement cooling and film cooling to cool the outer sheet 50. Further, as shown in FIG. 2, a radial gap 76 exists between the locating portion 66 and the locating opening 68 to allow for thermal growth differential between the relatively high temperature outer sheet 50 and the relatively low temperature inner sheet 48.

Forming the tip section 64 by alternative manufacturing methods such as additive manufacturing, electrical discharge machining (EDM), chemical milling or chemical etching, is not limited by conventional machining tooling capabilities and can be utilized to reduce a size of the thermal mass at the tip section 64, and allows for film cooling holes 58 to be located much closer to an apex 72 of the tip section 64. In some embodiments, an inner radius 74 defined between the locating portion 66 and the inner surface 56 of the outer sheet 50 is in the range of 0.0025 inches to 0.125 inches (0.06 millimeters to 3.175 millimeters). In other embodiments, the inner radius is in the range of 0.0025 inches to 0.015 inches (0.06 millimeters to 0.38 millimeters). In some embodiments, a film cooling hole 58 nearest the apex 72 is located in the outer sheet 50 between about 0.010 inches and 0.125 inches (0.25 millimeters to 3.175 millimeters) from the inner radius 74. In other embodiments, the film cooling hole 58 nearest the apex 72 is located in the outer sheet 50 between 0.010 inches and 0.030 inches (0.25 millimeters to 0.76 millimeters) from the inner radius 74. In one embodiment, the film cooling hole 58 nearest the apex 72 is located in the outer sheet 50 at 0.020 inches (0.51 millimeters) from the inner radius 74.

The tip section 64 of the tail cone 46 disclosed herein allows for improved cooling effectiveness of the tail cone 46, and also improved aerodynamic performance of the gas turbine engine 10 because of the improved high-temperature tolerance of the tail cone 46, due to more effective cooling of the tail cone 46 and allowing the tail cone 46 to be constructed with a relatively sharp angle at its tip.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A tail cone (46) for a gas turbine engine (10), comprising:
a tip section (64) including an inner radius (74);
an outer sheet (50) converging to the tip section (64) and further comprising an inner surface (56);
an inner sheet (48) located radially inboard from and spaced from the outer sheet (50); and
a plurality of film cooling openings (58) extending through the outer sheet (50) to direct a cooling airflow therethrough to cool the outer sheet (50);
**characterised in that**
the inner sheet (48) includes a locating opening (68);
the outer sheet (50) further comprises a locating portion (66) extending axially into the locating opening (68) of the inner sheet (48) to define and control a spacing (70) between the outer sheet and the inner sheet (48), a radial gap (76) existing between the locating portion (66) and the locating opening (68);
the inner radius (74) is defined between the locating portion (66) and the inner surface (56) of the outer sheet (50), and
wherein a film cooling opening nearest an apex (72) of the tip section is located between 0.25 mm and 3.175 mm from the inner radius (74).

2. The tail cone (46) of claim 1, wherein the locating portion (66) is cylindrical.

3. The tail cone (46) of claim 1 or 2, wherein the inner radius (74) is in the range of 0.06 mm and 3.175 mm.

4. The tail cone (46) of claim 3, wherein the inner radius (74) is in the range of 0.06 mm to 0.38 mm.

5. A gas turbine engine (10), comprising:
a turbine section; and
the tail cone (46) of any preceding claim disposed axially downstream of the turbine section.

6. A method of forming a tail cone (46) of a gas turbine engine (10) comprising:
forming an outer sheet (50) that converges to a tip section (64) with an inner radius (74), the outer sheet (50) comprising an inner surface (56);
locating an inner sheet (48) radially inboard from and spaced from the outer sheet (50); and
forming a plurality of film cooling openings (58) extending through the outer sheet (50) to direct a cooling airflow therethrough to cool the outer sheet;
**characterised in that**
the outer sheet (50) further comprises a locating portion (66), the inner radius (74) defined between the locating portion and an inner surface (56) of the outer sheet;
the inner sheet (48) further comprises a locating opening (68);
and the method further comprises inserting the locating portion (66) of the outer sheet (50) into the locating opening (68) of the inner sheet (48) to define and control a spacing between the outer sheet and the inner sheet, a radial gap existing between the locating portion (66) and the locating opening (68);
wherein a film cooling opening nearest an apex (72) of the tip section (64) is located between 0.25 mm and 0.76 mm from the inner radius (74).

7. The method of claim 6, further comprising forming the minimum radius between the outer sheet (50) and the locating portion (66) in the range of 0.06 mm to 0.38 mm.

8. The method of claim 6 or 7, wherein the tip section (64) is formed from one or more of additive manufacturing, electrical discharge machining (EDM), chemical milling or chemical etching.

## Patentansprüche

1. Heckkonus (46) für ein Gasturbinentriebwerk (10), Folgendes umfassend:
einen Spitzenabschnitt (64), der einen inneren Radius (74) beinhaltet;
ein äußeres Blech (50), das sich zu dem Spitzenabschnitt (64) hin verjüngt und ferner eine innere Oberfläche (56) umfasst;
ein inneres Blech (48), das sich radial innerhalb des äußeren Blechs (50) befindet und von diesem beabstandet ist; und
eine Vielzahl von Filmkühlungsöffnungen (58), die sich durch das äußere Blech (50) erstrecken, um einen Kühlungsluftstrom hindurchzuleiten, um das äußere Blech (50) zu kühlen;
**dadurch gekennzeichnet, dass**
das innere Blech (48) eine Aufnahmeöffnung (68) beinhaltet;
das äußere Blech (50) ferner ein Aufnahmeteil (66) umfasst, das sich axial in die Aufnahmeöffnung (68) des inneren Blechs (48) erstreckt, um einen Abstand (70) zwischen dem äußeren Blech und dem inneren Blech (48) zu definieren und zu kontrollieren, wobei ein radialer Spalt (76) zwischen dem Aufnahmeteil (66) und der Aufnahmeöffnung (68) existiert;
der innere Radius (74) zwischen dem Aufnahmeteil (66) und der inneren Oberfläche (56) des äußeren Blechs (50) definiert ist, und
wobei sich eine Filmkühlungsöffnung, die einem Scheitelpunkt (72) des Spitzenabschnitts am nächsten ist, zwischen 0,25 mm und 3,175 mm von dem inneren Radius (74) entfernt befindet.

2. Heckkonus (46) nach Anspruch 1, wobei das Aufnahmeteil (66) zylindrisch ist.

3. Heckkonus (46) nach Anspruch 1 oder 2, wobei der innere Radius (74) im Bereich von 0,06 mm bis 3,175 mm liegt.

4. Heckkonus (46) nach Anspruch 3, wobei der innere Radius (74) im Bereich von 0,06 mm bis 0,38 mm liegt.

5. Gasturbinentriebwerk (10), Folgendes umfassend:
einen Turbinenabschnitt; und
einen Heckkonus (46) nach einem der vorhergehenden Ansprüche, der axial stromabwärts des Turbinenabschnitts angeordnet ist.

6. Verfahren zum Bilden eines Heckkonus (46) für ein Gasturbinentriebwerk (10), Folgendes umfassend:
Bilden eines äußeren Blechs (50), das sich zu einem Spitzenabschnitt (64) mit einem inneren Radius (74) hin verjüngt, wobei das äußere Blech (50) eine innere Oberfläche (56) umfasst;
Positionieren eines inneren Blechs (48) radial innerhalb des äußeren Blechs (50) und von diesem beabstandet; und
Bilden einer Vielzahl von Filmkühlungsöffnungen (58), die sich durch das äußere Blech (50) erstrecken, um einen Kühlungsluftstrom hindurchzuleiten, um das äußere Blech zu kühlen;
**dadurch gekennzeichnet, dass**
das äußere Blech (50) ferner ein Aufnahmeteil (66) umfasst, wobei der innere Radius (74) zwischen dem Aufnahmeteil und einer inneren Oberfläche (56) des äußeren Blechs definiert ist;
das innere Blech (48) ferner eine Aufnahmeöffnung (68) umfasst;
und das Verfahren ferner umfasst, dass das Aufnahmeteil (66) des äußeren Blechs (50) in die Aufnahmeöffnung (68) des inneren Blechs (48) eingeführt wird, um einen Abstand zwischen dem äußeren Blech und dem inneren Blech zu definieren und zu kontrollieren, wobei ein radialer Spalt zwischen dem Aufnahmeteil (66) und der Aufnahmeöffnung (68) existiert;
wobei sich eine Filmkühlungsöffnung, die einem Scheitelpunkt (72) des Spitzenabschnitts (64) am nächsten ist, zwischen 0,25 mm und 0,76 mm von dem inneren Radius (74) entfernt befindet.

7. Verfahren nach Anspruch 6, ferner ein Bilden des Minimalradius zwischen dem äußeren Blech (50) und dem Aufnahmeteil (66) im Bereich von 0,06 mm bis 0,38 mm umfassend.

8. Verfahren nach Anspruch 6 oder 7, wobei der Spitzenabschnitt (64) durch eines oder mehrere von Folgendem gebildet wird: additive Herstellung, Funkenerosion (EDM), Formätzen oder chemisches Ätzen.

## Revendications

1. Cône de queue (46) pour un moteur à turbine à gaz (10), comprenant :
une section de pointe (64) comportant un rayon intérieur (74) ;
une feuille extérieure (50) convergeant vers la section de pointe (64) et comprenant en outre une surface intérieure (56) ;
une feuille intérieure (48) située radialement à l'intérieur et espacée de la feuille extérieure (50) ; et
une pluralité d'ouvertures de refroidissement de film (58) s'étendant à travers la feuille extérieure (50) pour diriger un écoulement d'air de refroidissement à travers celle-ci afin de refroidir la feuille extérieure (50) ;
**caractérisé en ce que**
la feuille intérieure (48) comporte un ouverture de positionnement (68) ;
la feuille extérieure (50) comprend en outre une partie de positionnement (66) s'étendant axialement dans l'ouverture de positionnement (68) de la feuille intérieure (48) pour définir et commander un espacement (70) entre la feuille extérieure et la feuille intérieure (48), un espace radial (76) existant entre la partie de positionnement (66) et l'ouverture de positionnement (68) ;
le rayon intérieur (74) est défini entre la partie de positionnement (66) et la surface intérieure (56) de la feuille extérieure (50), et
dans lequel une ouverture de refroidissement de film la plus proche d'un sommet (72) de la section de pointe est située entre 0,25 mm et 3,175 mm du rayon intérieur (74).

2. Cône de queue (46) selon la revendication 1, dans lequel la partie de positionnement (66) est cylindrique.

3. Cône de queue (46) selon la revendication 1 ou 2, dans lequel le rayon intérieur (74) est compris dans la plage allant de 0,06 mm à 3,175 mm.

4. Cône de queue (46) selon la revendication 3, dans lequel le rayon intérieur (74) est compris dans la plage allant de 0,06 mm à 0,38 mm.

5. Moteur à turbine à gaz (10), comprenant :
une section de turbine ; et
le cône de queue (46) selon une quelconque revendication précédente disposé axialement en aval de la section de turbine.

6. Procédé de formation d'un cône de queue (46) d'un moteur à turbine à gaz (10) comprenant :
la formation d'une feuille extérieure (50) qui converge vers une section de pointe (64) avec un rayon intérieur (74), la feuille extérieure (50) comprenant une surface intérieure (56) ;
le positionnement d'une feuille intérieure (48) radialement à l'intérieur et espacée de la feuille extérieure (50) ; et
la formation d'une pluralité d'ouvertures de refroidissement de film (58) s'étendant à travers la feuille extérieure (50) pour diriger un écoulement d'air de refroidissement à travers celle-ci afin de refroidir la feuille extérieure ;
**caractérisé en ce que**
la feuille extérieure (50) comprend en outre une partie de positionnement (66), le rayon intérieur (74) étant défini entre la partie de positionnement et une surface intérieure (56) de la feuille extérieure ;
la feuille intérieure (48) comprend en outre une ouverture de positionnement (68) ;
et le procédé comprend en outre l'insertion de la partie de positionnement (66) de la feuille extérieure (50) dans l'ouverture de positionnement (68) de la feuille intérieure (48) pour définir et commander un espacement entre la feuille extérieure et la feuille intérieure, un espace radial existant entre la partie de positionnement (66) et l'ouverture de positionnement (68) ;
dans lequel une ouverture de refroidissement de film la plus proche d'un sommet (72) de la section de pointe (64) est située entre 0,25 mm et 0,76 mm du rayon intérieur (74).

7. Procédé selon la revendication 6, comprenant en outre la formation du rayon minimal entre la feuille extérieure (50) et la partie de positionnement (66) dans la plage allant de 0,06 mm à 0,38 mm.

8. Procédé selon la revendication 6 ou 7, dans lequel la section de pointe (64) est formée à partir de l'un ou plusieurs parmi la fabrication additive, l'usinage par décharge électrique (EDM), l'usinage chimique ou la gravure chimique.
